# EUROPEAN PATENT SPECIFICATION

(11) **EP 3 608 647 B1**
(45) Date of publication and mention of the grant of the patent: **27.01.2021**
(21) Application number: 19186824.9
(22) Date of filing: 17.07.2019
(51) Int. Cl.: G01L 23/18, G01L 23/22, G01L 23/24

(54) **PRESSURE SENSOR**
DRUCKSENSOR
CAPTEUR DE PRESSION

(30) Priority: 17.07.2018 JP 2018134192
(43) Date of publication of application: 12.02.2020
(73) Proprietor: NGK SPARK PLUG CO., LTD., Mizuho-ku Nagoya-shi Aichi 4678525 (JP)
(72) Inventor: SASSA, Akimitsu, Nagoya-shi, Aichi 4678525 (JP)
(74) Representative: J A Kemp LLP

(56) References cited:
- US-A1- 2015 027 213
- US-A1- 2016 076 971

## Description

The present invention relates to a pressure sensor, particularly, to a pressure sensor for detecting combustion pressure in a combustion chamber of an internal combustion engine body, as defined in claim 1.

US 2016/0076971 A1, on which the pre-characterising portion of claim 1 is based, discloses a pressure sensor.

Japanese Patent No. 4922822 discloses a pressure sensor extending in an axial direction thereof, adapted to detect combustion pressure in a combustion chamber of an internal combustion engine body, and attached to the internal combustion engine body (e.g., the cylinder head of the internal combustion engine body) with its axially forward end directed toward the combustion chamber. The pressure sensor includes an axially extending rod-shaped displacement member (transmission member) displaceable in the axial direction in response to a change in combustion pressure received from the axially forward side. The pressure sensor further includes a housing having an axially extending tubular shape and radially surrounding at least a portion of the displacement member. A portion of the housing is in contact with the internal combustion engine body (e.g., the cylinder head of the internal combustion engine body). The pressure sensor further includes a diaphragm member (abutting member) connected to the displacement member and having a diaphragm portion (mounting portion) which distorts in response to a displacement of the displacement member resulting from a change in combustion pressure. The pressure sensor further includes a pressure detection element provided on the front surface of the diaphragm portion.

The diaphragm member has an annular shape in plan view and has a through hole extending therethrough in the axial direction. The displacement member is connected to the diaphragm member while being inserted through the through hole of the diaphragm member. The displacement member has a protruding portion protruding from the through hole of the diaphragm member toward an axially forward side (i.e., toward a combustion chamber side) and exposed to combustion gas.

The diaphragm member has the diaphragm portion, a first connection portion, a second connection portion, a first intermediate connection portion, and a second intermediate connection portion. The diaphragm portion has an annular plate shape, has a front surface and a back surface, and carries the pressure detection element on the front surface, which is not exposed to combustion gas. The first connection portion is located axially forward (i.e., on the combustion chamber side) of the diaphragm portion and connects the diaphragm member to the displacement member. The second connection portion is located axially forward (i.e., on the combustion chamber side) of the diaphragm portion and connects the diaphragm member to the housing. The first intermediate connection portion has an axially extending cylindrical shape and connects a radially inner portion of the diaphragm portion and the first connection portion. The second intermediate connection portion has an axially extending cylindrical shape and connects a radially outer portion of the diaphragm portion and the second connection portion.

In such a pressure sensor, a portion of heat of combustion gas is transmitted from the protruding portion (a portion protruding axially forward from the through hole of the diaphragm member and exposed to combustion gas) of the displacement member to the diaphragm portion through the first connection portion (a portion connected to the displacement member) and the first intermediate connection portion of the diaphragm member. Heat transmitted to the diaphragm portion is then transmitted to the housing through the second intermediate connection portion and the second connection portion (a portion connected to the housing) to thereby be released to the internal combustion engine body.

In the pressure sensor of Japanese Patent No. 4922822, the thickness of the first intermediate connection portion is equal to that of the second intermediate connection portion, and the minimum thickness of the diaphragm portion is smaller than the thickness of the first intermediate connection portion. Also, the pressure sensor of Japanese Patent No. 4922822 has a seal member provided axially forward (i.e., on the combustion chamber side) of the diaphragm portion. The seal member prevents combustion gas from entering a space located axially rearward of the seal member, thereby preventing exposure of the back surface of the diaphragm portion to combustion gas.

However, the above-mentioned pressure sensor has involved the following potential problem: heat transmitted to the diaphragm portion is partially transmitted to the pressure detection element mounted on the front surface of the diaphragm portion; as a result, the pressure detection element increases in temperature. Particularly, the inventor of the present application is studying a structure in which, in order to enhance sensitivity to a change in combustion pressure, the back surface of the diaphragm portion is exposed to combustion gas without provision of the above-mentioned seal member. In such a structure, in addition to transmission of a portion of heat of combustion gas to the diaphragm portion through the protruding portion of the displacement member, a portion of combustion gas comes into contact with the back surface of the diaphragm portion; consequently, a portion of heat of combustion gas is transmitted directly to the diaphragm portion. As a result, the pressure detection element mounted on the front surface of the diaphragm portion further increases in temperature, potentially resulting in various problems such as deterioration in pressure detection performance and breakage of the pressure detection element.

The invention consists of a pressure sensor as defined in claim 1.

The present invention has been conceived in view of the above problem, and an object of the invention is to provide a pressure sensor capable of reducing an increase in temperature of a pressure detection element mounted on the front surface of a diaphragm portion.

An aspect of the present invention relates to a pressure sensor which extends in an axial direction and detects combustion pressure in a combustion chamber of an internal combustion engine body while being attached to the internal combustion engine body in such a manner that an end of the pressure sensor on a forward side with respect to the axial direction is directed toward the combustion chamber, comprising: a rod-shaped displacement member extending in the axial direction, and being displaceable in the axial direction in response to a change in the combustion pressure received from the axially forward side; a tubular housing extending in the axial direction, radially surrounding at least a portion of the displacement member, and being partially in contact with the internal combustion engine body; a diaphragm member connected to the displacement member and having a diaphragm portion being distorted in response to a displacement of the displacement member resulting from a change in the combustion pressure; and a pressure detection element provided on a front surface of the diaphragm portion. The diaphragm member has an annular shape in plan view and has a through hole extending therethrough in the axial direction. The displacement member is connected to the diaphragm member while being inserted through the through hole of the diaphragm member and has a protruding portion protruding from the through hole of the diaphragm member toward the axially forward side and exposed to combustion gas generated in the combustion chamber. The diaphragm member has the diaphragm portion having an annular plate shape, having the front surface and a back surface, and carrying the pressure detection element on the front surface not exposed to the combustion gas, a first connection portion located on the axially forward side of the diaphragm portion and connecting the diaphragm member to the displacement member, a second connection portion located on the axially forward side of the diaphragm portion and connecting the diaphragm member to the housing, a cylindrical first intermediate connection portion extending in the axial direction and connecting the first connection portion and a radially inner portion of the diaphragm portion, and a cylindrical second intermediate connection portion extending in the axial direction and connecting the second connection portion and a radially outer portion of the diaphragm portion. The diaphragm portion is disposed at such a position that the back surface is exposed to the combustion gas. A maximum thickness T1 of the first intermediate connection portion and a minimum thickness T2 of the second intermediate connection portion satisfy a relation of T1 < T2.

The above-mentioned pressure sensor extends in the axial direction and detects combustion pressure in a combustion chamber of an internal combustion engine body (e.g., a cylinder head of the internal combustion engine body) while being attached to the internal combustion engine body in such a manner that an end of the pressure sensor on a forward side with respect to the axial direction is directed toward the combustion chamber. Notably, the internal combustion engine body, together with various apparatus attached thereto such as the above-mentioned pressure sensor and a fuel injection apparatus, constitutes an internal combustion engine.

The pressure sensor includes the "rod-shaped displacement member extending in the axial direction, and being displaceable in the axial direction in response to a change in the combustion pressure received from the axially forward side." The pressure sensor further includes the "tubular housing extending in the axial direction and radially surrounding at least a portion of the displacement member." The housing is partially in contact with the internal combustion engine body (e.g., the cylinder head of the internal combustion engine body). The pressure sensor further includes the "diaphragm member connected to the displacement member and having a diaphragm portion being distorted in response to an axial displacement of the displacement member resulting from a change in the combustion pressure." The pressure sensor further includes the pressure detection element provided on the front surface of the diaphragm portion.

The diaphragm member has an annular shape in plan view and has a through hole extending therethrough in the axial direction. The displacement member is connected to the diaphragm member while being inserted through the through hole of the diaphragm member. The displacement member has a protruding portion protruding from the through hole of the diaphragm member toward the axially forward side (i.e., a combustion chamber side) and exposed to combustion gas.

The diaphragm member has the diaphragm portion, the first connection portion, the second connection portion, the first intermediate connection portion, and the second intermediate connection portion. The diaphragm portion has an annular plate shape, has the front surface and the back surface, and carries the pressure detection element on the front surface not exposed to the combustion gas. The first connection portion is located on the axially forward side (i.e., on the combustion chamber side) of the diaphragm portion and connects the diaphragm member to the displacement member. The second connection portion is located on the axially forward side (i.e., on the combustion chamber side) of the diaphragm portion and connects the diaphragm member to the housing. The first intermediate connection portion has a cylindrical shape, extends in the axial direction, and connects the first connection portion and a radially inner portion of the diaphragm portion. The second intermediate connection portion has a cylindrical shape, extends in the axial direction, and connects the second connection portion and a radially outer portion of the diaphragm portion.

In such a pressure sensor, a portion of heat of combustion gas is transmitted from the protruding portion (a portion protruding axially forward from the through hole of the diaphragm member and exposed to combustion gas) of the displacement member to the diaphragm portion through the first connection portion (a portion connected to the displacement member) and the first intermediate connection portion of the diaphragm member. Heat transmitted to the diaphragm portion is then transmitted to the housing through the second intermediate connection portion and the second connection portion (a portion connected to the housing) to thereby be released to the internal combustion engine body.

However, as a result of heat transmitted to the diaphragm portion being partially transmitted to the pressure detection element mounted on the front surface of the diaphragm portion, the pressure detection element may increase in temperature. Particularly, in the above-mentioned pressure sensor attached to the internal combustion engine body, the back surface of the diaphragm portion is exposed to combustion gas generated in the combustion chamber. As a result, in addition to transmission of a portion of heat of combustion gas to the diaphragm portion through the protruding portion of the displacement member, a portion of combustion gas comes into contact with the back surface of the diaphragm portion; consequently, a portion of heat of combustion gas is transmitted directly to the diaphragm portion. Therefore, the temperature of the pressure detection element mounted on the front surface of the diaphragm portion may further increase.

By contrast, in the above-mentioned pressure sensor, the diaphragm member satisfies the relation of T1 < T2 between the maximum thickness T1 of the first intermediate connection portion and the minimum thickness T2 of the second intermediate connection portion. Notably, the maximum thickness of the first intermediate connection portion is the maximum value of thickness (radial wall thickness) of the first intermediate connection portion. Specifically, in the case where the thickness of the first intermediate connection portion is uniform, the thickness (the fixed value) is considered as the maximum thickness. In the case where the thickness of the first intermediate connection portion is not uniform, the thickness of a thickest portion is considered as the maximum thickness. The minimum thickness of the second intermediate connection portion is the minimum value of thickness (radial wall thickness) of the second intermediate connection portion. Specifically, in the case where the thickness of the second intermediate connection portion is uniform, the thickness (the fixed value) is considered as the minimum thickness. In the case where the thickness of the second intermediate connection portion is not uniform, the thickness of a thinnest portion is considered as the minimum thickness.

As a result of the diaphragm member employing such a thickness relation that the maximum thickness T1 of the first intermediate connection portion, which connects the first connection portion connected to the displacement member and a radially inner portion of the diaphragm portion, is smaller than the minimum thickness T2 of the second intermediate connection portion, which connects the second connection portion connected to the housing and a radially outer portion of the diaphragm portion, heat conduction from the protruding portion of the displacement member to the diaphragm portion through the first intermediate connection portion can be reduced as compared with the case where the maximum thickness T1 is equal to or greater than the minimum thickness T2 (e.g., the case in Japanese Patent No. 4922822 where the thickness of the first intermediate connection portion is equal to the thickness of the second intermediate connection portion). Accordingly, an increase in temperature of the diaphragm portion can be reduced.

Further, as a result of employment of such a thickness relation that the minimum thickness T2 of the second intermediate connection portion is greater than the maximum thickness T1 of the first intermediate connection portion, heat conduction from the diaphragm portion to the second intermediate connection portion can be enhanced, and heat conduction from the second intermediate connection portion to the housing can be enhanced. Accordingly, heat release from the diaphragm portion to the housing (to the internal combustion engine body in contact with the housing) can be enhanced.

Therefore, in the above-mentioned pressure sensor, an increase in temperature of the pressure detection element mounted on the front surface of the diaphragm portion can be reduced.

Further, preferably, the above-mentioned pressure sensor is configured such that: the diaphragm portion has a radially inner portion connected to the first intermediate connection portion, a radially outer portion connected to the second intermediate connection portion, and an intermediate portion located between the inner portion and the outer portion; the intermediate portion is smaller in thickness than the inner portion and the outer portion; at least a portion of the pressure detection element is mounted on a front surface of the intermediate portion; and in a section of the pressure sensor cut in the axial direction by a plane containing an axial line of the pressure sensor, an outer surface of the first intermediate connection portion, which surface faces radially outward, has a sectionally straight portion extending straight toward the first connection portion from a boundary between the inner portion and the first intermediate connection portion, an inner surface of the second intermediate connection portion, which surface faces radially inward, has a sectionally straight portion extending straight toward the second connection portion from a boundary between the outer portion and the second intermediate connection portion, and a boundary portion of the back surface of the diaphragm portion adjacent to the outer surface of the first intermediate connection portion and a boundary portion of the back surface adjacent to the inner surface of the second intermediate connection portion have an arc shape.

In the above-mentioned pressure sensor, the diaphragm portion has such a thickness relation that the intermediate portion is smaller in thickness than the inner portion and the outer portion. In such a diaphragm portion, the thinner intermediate portion is distorted greatly in response to a change in combustion pressure as compared with the inner portion and the outer portion. Further, in the above-mentioned pressure sensor, at least a portion of the pressure detection element is mounted on the front surface of the intermediate portion. As a result, since at least a portion of the pressure detection element, together with the intermediate portion of the diaphragm portion, is distorted greatly in response to a change in combustion pressure, sensitivity of the pressure sensor to a change in combustion pressure can be improved.

Also, in the above-mentioned pressure sensor, in a section of the pressure sensor cut in the axial direction by a plane containing an axial line (center axis) of the pressure sensor, the outer surface of the first intermediate connection portion, which surface faces radially outward, has the sectionally straight portion extending straight toward the first connection portion from the boundary between the inner portion of the diaphragm portion and the first intermediate connection portion, and the inner surface of the second intermediate connection portion, which surface faces radially inward, has the sectionally straight portion extending straight toward the second connection portion from the boundary between the outer portion of the diaphragm portion and the second intermediate connection portion. Further, in the section of the pressure sensor, the boundary portion of the back surface of the diaphragm portion adjacent to the outer surface of the first intermediate connection portion and the boundary portion of the back surface adjacent to the inner surface of the second intermediate connection portion have an arc shape. By virtue of impartment of an arc shape to the boundary portions of the back surface of the diaphragm portion, the diaphragm portion can be deformed appropriately in response to an axial displacement of the displacement member.

Notably, the expression "extending straight toward the first connection portion" means "extending in a straight line toward a first connection portion side" and encompasses not only "extending straight in the axial direction (along the axial line" but also "extending straight in a direction intersecting the axial direction (a direction oblique to the axial line)." The same also applies to "extending straight toward the second connection portion."

Further, preferably, either one of the above-mentioned pressure sensors satisfies a relation of T1 < T3 between the maximum thickness T1 of the first intermediate connection portion and the minimum thickness T3 of the diaphragm portion.

In the above-mentioned pressure sensor, the diaphragm member satisfies the relation of T1 < T3 between the maximum thickness T1 of the first intermediate connection portion and the minimum thickness T3 of the diaphragm portion. As a result of increasing the thickness of the diaphragm portion as mentioned above, as compared with a case of T1 ≥ T3 (e.g., a case of T1 > T3 in Japanese Patent No. 4922822), heat capacity of the diaphragm portion can be increased, and heat conduction from the diaphragm portion to the second intermediate connection portion can be enhanced (accordingly, heat release to the internal combustion engine body can be enhanced), whereby an increase in temperature of the diaphragm portion can be reduced. Therefore, in the above-mentioned pressure sensor, an increase in temperature of the pressure detection element mounted on the front surface of the diaphragm portion can be further reduced.

Further, preferably, any one of the above-mentioned pressure sensors satisfies a relation of T4 < T5 between a thickness T4 of the second intermediate connection portion at a boundary portion adjacent to the diaphragm portion and a thickness T5 of the second intermediate connection portion at a boundary portion adjacent to the second connection portion.

In the above-mentioned pressure sensor, the second intermediate connection portion of the diaphragm member satisfies the relation of T4 < T5 between the thickness T4 of the boundary portion adjacent to the diaphragm portion and the thickness T5 of the boundary portion adjacent to the second connection portion. As a result of increasing the thickness T5 of the second intermediate connection portion at the boundary portion adjacent to the second connection portion, heat conduction from the second intermediate connection portion to the second connection portion can be enhanced (accordingly, heat release to the internal combustion engine body can be enhanced), whereby an increase in temperature of the diaphragm portion can be further reduced. Therefore, in the above-mentioned pressure sensor, an increase in temperature of the pressure detection element mounted on the front surface of the diaphragm portion can be further reduced.

According to an example form of the second intermediate connection portion satisfying the relation of T4 < T5, the outer circumferential surface of the second intermediate connection portion assumes a cylindrical surface extending straight in the axial direction, whereas the inner circumferential surface of the second intermediate connection portion assumes such a conical surface as to reduce in diameter (i.e., increases in distance from the outer circumferential surface) toward the axially forward side (i.e., toward the second connection portion). Alternatively, the following form may be employed for the second intermediate connection portion: the second intermediate connection portion consists of a portion located toward the diaphragm portion and a portion located toward the second connection portion; the two portions assume respective cylindrical shapes and extend in the axial direction; and the thickness (wall thickness) of the latter portion is greater than the thickness (wall thickness) of the former portion (i.e., a 2-step cylindrical shape).

[FIG. 1] Exterior view of a pressure sensor according to an embodiment.
[FIG. 2] Longitudinal sectional view of the pressure sensor.
[FIG. 3] Fragmentary sectional view of the pressure sensor attached to an internal combustion engine body.
[FIG. 4] Enlarged view of region A of FIG. 3.
[FIG. 5] Enlarged view of region D of FIG. 4.
[FIG. 6] Perspective sectional view of a diaphragm member according to the embodiment.
[FIG. 7] Sectional view of the pressure sensor taken along line G-G of FIG. 4.
[FIG. 8] Graph comparing surface temperatures of diaphragm portions.
[FIG. 9] Enlarged fragmentary sectional view of the pressure sensor having a diaphragm member according to a modified embodiment.

### (Embodiment)

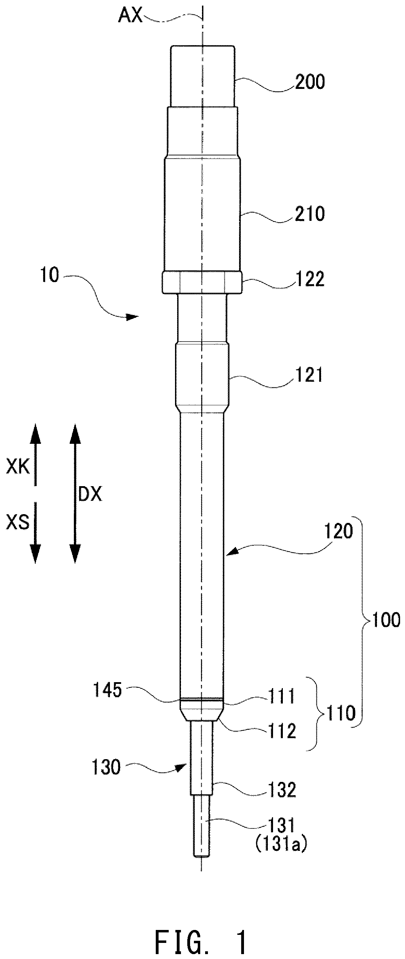

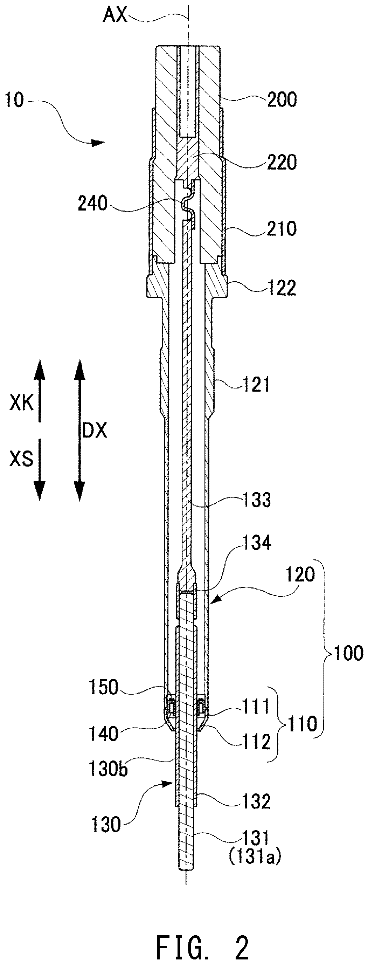

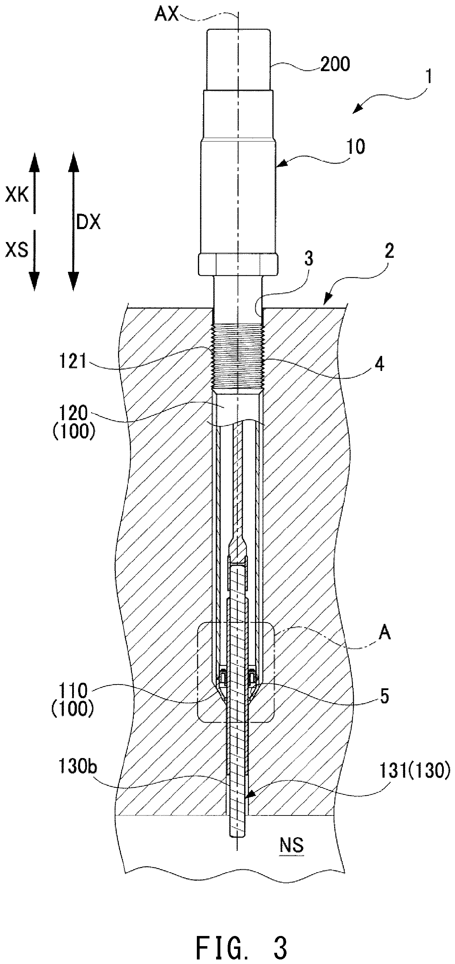

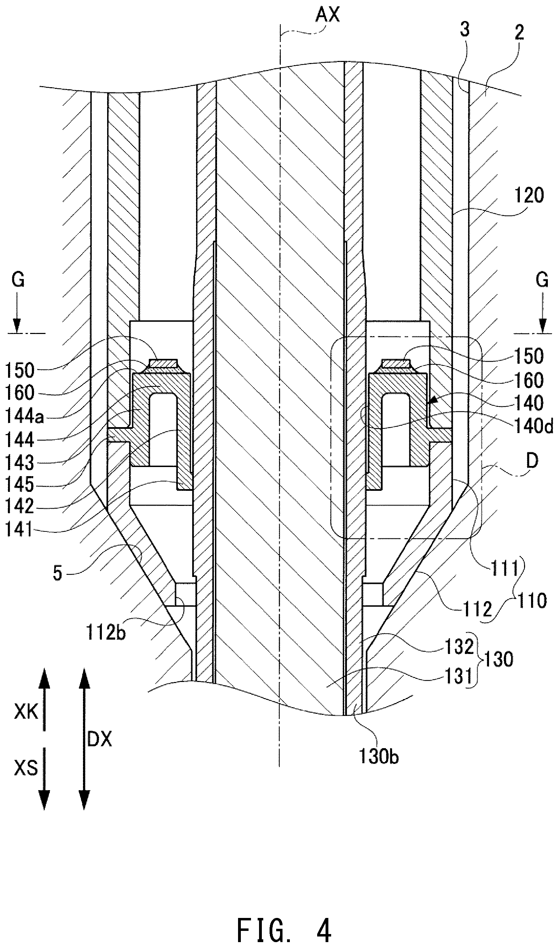

A pressure sensor 10 according to an embodiment of the present invention will next be described with reference to the drawings. FIG. 1 is an exterior view (side view) of the pressure sensor 10 according to the embodiment. FIG. 2 is a longitudinal sectional view of the pressure sensor 10 cut along an axial direction DX (a direction along an axial line AX) by a plane which contains the axial line AX. FIG. 3 is an enlarged fragmentary sectional view of the pressure sensor 10 attached to a sensor attachment hole 3 of a cylinder head 2 of an internal combustion engine body 1. FIG. 4 is an enlarged view of region A of FIG. 3, or an enlarged fragmentary sectional view of the pressure sensor 10 cut along the axial direction DX by a plane which contains the axial line AX (center axis) of the pressure sensor 10.

In FIGS. 1 to 4, a forward side XS is a side where a heater member 131 is disposed (lower side in FIGS. 1 to 4) with respect to the axial direction DX (vertical direction in FIGS. 1 to 4) along the axial line AX of the pressure sensor 10, and a rearward side XK is a side opposite the forward side XS (upper side in FIGS. 1 to 4).

As will be described later, the pressure sensor 10 of the present embodiment includes a displacement member 130 containing the heater member 131. The pressure sensor 10 extends in the axial direction DX and detects pressure (combustion pressure) in a combustion chamber NS while being attached to the internal combustion engine body 1 in such a manner that an end of the pressure sensor 10 on the forward side XS with respect to the axial direction DX is directed toward the combustion chamber NS of the internal combustion engine body 1. Specifically, as shown in FIG. 3, the pressure sensor 10 is attached to the sensor attachment hole 3 of the cylinder head 2 of the internal combustion engine body 1 in such a manner that a forward end portion of the displacement member 130 (heater member 131) is disposed within the combustion chamber NS. The pressure sensor 10 not only detects pressure (combustion pressure) in the combustion chamber NS of the internal combustion engine body 1 but also heats (preheats) the interior of the combustion chamber NS.

The pressure sensor 10 includes a tubular housing 100 extending in the axial direction DX, the rod-shaped displacement member 130 extending in the axial direction DX, a diaphragm member 140 connected to the displacement member 130, pressure detection elements 150, a connector member 200, and a protection tube 210 (see FIGS. 1 to 4).

The housing 100 radially surrounds at least a portion of the displacement member 130 (see FIG. 2). In a state in which the pressure sensor 10 is attached to the sensor attachment hole 3 of the cylinder head 2, the housing 100 is partially in contact with the cylinder head 2 of the internal combustion engine body 1 (see FIGS. 3 and 4).

More specifically, the housing 100 has a tubular first housing portion 110 located on the forward side XS with respect to the axial direction DX and a tubular second housing portion 120 located on the rearward side XK of the first housing portion 110 (see FIGS. 1 and 2). The first housing portion 110 and the second housing portion 120 are formed of metal such as carbon steel or stainless steel.

The first housing portion 110 has a cylindrical portion 111 and a seal portion 112 tapered (inclined) in such a manner as to reduce in diameter toward the forward side XS from the cylindrical portion 111. The heater member 131 of the displacement member 130, which will be described later, protrudes from an opening 112b located at the forward side XS of the seal portion 112. The inside diameter of the opening 112b is greater than the outside diameter of the displacement member 130.

The pressure sensor 10 of the present embodiment is attached to the cylinder head 2 of the internal combustion engine body 1 such that the forward side XS of the heater member 131 contained in the displacement member 130 is disposed in the combustion chamber NS while the seal portion 112 of the first housing portion 110 is in contact (close contact) with a taper surface 5 of the sensor attachment hole 3 of the internal combustion engine body 1 (see FIGS. 3 and 4). When the pressure sensor 10 is attached to the sensor attachment hole 3 of the cylinder head 2 as mentioned above, the seal portion 112 of the first housing portion 110 is brought in contact under pressure with the taper surface 5 of the sensor attachment hole 3 of the cylinder head 2, thereby securing gastightness of the combustion chamber NS of the internal combustion engine body 1.

The second housing portion 120 has a cylindrical shape. The second housing portion 120 has a collar portion 122 formed at a rear end portion thereof. Further, the second housing portion 120 has a threaded portion 121 (external thread) formed on the forward side XS of the collar portion 122 for fixing the pressure sensor 10 to the cylinder head 2 of the internal combustion engine body 1. Therefore, the pressure sensor 10 is fixed to the cylinder head 2 of the internal combustion engine body 1 as a result of being inserted into the sensor attachment hole 3 of the cylinder head 2 from the forward side XS thereof with the threaded portion 121 being threadingly engaged with an internal thread 4 formed on the wall of the sensor attachment hole 3 of the cylinder head 2 (see FIG. 3).

Further, the connector member 200 is provided on the rearward side XK of the second housing portion 120 (see FIG. 2). The connector member 200 has a cylindrical shape and is formed of an electrically insulating material, for example, an insulating resin. Further, the connector member 200 holds a terminal member 220 therein.

The protection tube 210 mechanically connects the second housing portion 120 and the connector member 200. The protection tube 210 has a cylindrical shape and is formed of an electrically conductive material, for example, stainless steel.

The displacement member 130 extends in the axial direction DX and is displaceable in the axial direction DX in response to a change in pressure (combustion pressure) received from the forward side XS (the combustion chamber side) with respect to the axial direction DX, which will be described later. The displacement member 130 includes the heater member 131, a sleeve 132 circumferentially surrounding the heater member 131, an axial rod 133 disposed on the rearward side XK of the heater member 131, and a ring 134 connecting the heater member 131 and the axial rod 133 (see FIG. 2).

The heater member 131 is a rod-shaped heat-generating element formed of a ceramic composition. The heater member 131 includes a rod-shaped substrate 131a extending in the axial direction DX and a heat-generating resistor (not shown) in a predetermined pattern embedded in the substrate 131a. The substrate 131a is formed of an electrically insulating ceramic material; for example, an electrically insulating ceramic material containing silicon nitride (Si₃N₄) as a main component.

The heat-generating resistor is formed of an electrically conductive ceramic material; for example, an electrically conductive ceramic material containing a mixture of tungsten carbide (WC) and silicon nitride (Si₃N₄) as a main component. A positive electrode and a negative electrode (not shown) are connected to the heat-generating resistor; the positive electrode is electrically connected to the ring 134 to be described later; and the negative electrode is electrically connected to the sleeve 132.

The sleeve 132 is a cylindrical metal member and is formed of, for example, stainless steel. The heater member 131 is press-fitted into the sleeve 132 and protrudes from the forward and rear ends of the sleeve 132 (see FIG. 3). As a result of the heater member 131 being fixedly fitted into the metal sleeve 132, the displacement member 130 containing the heater member 131 can be joined by welding to the metal diaphragm member 140 through the sleeve 132.

The axial rod 133 is a circular columnar metal member and is formed of, for example, stainless steel. The ring 134 is a cylindrical metal member formed of, for example, stainless steel (see FIG. 2).

The rear end of the heater member 131 is press-fitted into the forward side XS of the ring 134. The forward end of the axial rod 133 is press-fitted into the rearward side XK of the ring 134. As a result, the ring 134 mechanically and electrically connects the heater member 131 and the axial rod 133 (see FIG. 2).

A rear end portion of the axial rod 133 is mechanically and electrically connected to the terminal member 220 through a terminal spring 240 (see FIG. 2). The terminal spring 240 is an electrically conductive, elastic member formed of, for example, stainless steel and assumes the form of a plate spring having a curved portion. The terminal spring 240 elastically expands and contracts in the axial direction DX in response to displacement in the axial direction DX of the displacement member 130 resulting from a pressure change in the combustion chamber to thereby absorb displacement of the displacement member 130.

The pressure sensor 10 of the present embodiment is configured such that electric power is input from an external power supply to the connector member 200 through a power supply line (not shown), and the input electric power is supplied to the positive electrode of the heater member 131 through the terminal spring 240, the axial rod 133, and the ring 134.

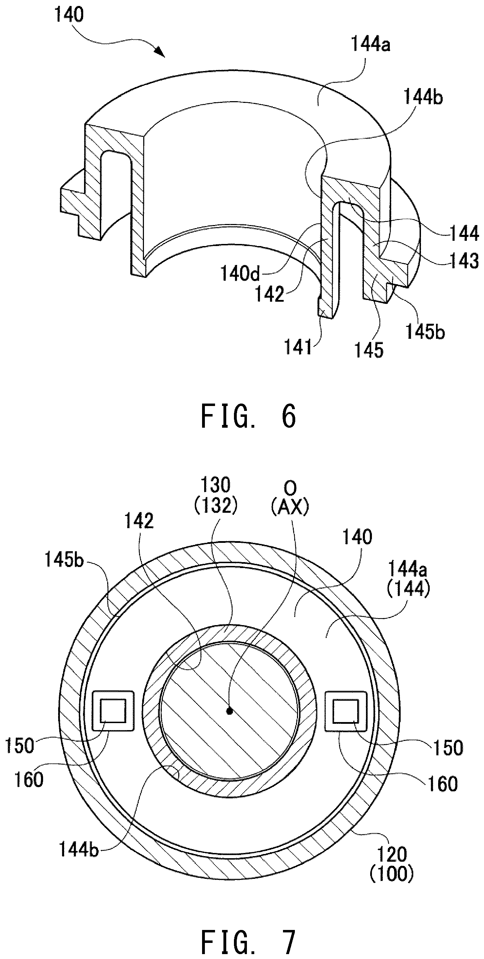

The diaphragm member 140 is a metal member having an annular shape in plan view and has a through hole 140d extending therethrough in the axial direction DX (see FIGS. 6 and 7). The diaphragm member 140 is formed of, for example, a nickel alloy containing Fe, Cr, Nb, Mo, etc. The diaphragm member 140 has a diaphragm portion 144 being distorted in response to displacement of the displacement member 130 resulting from a change in combustion pressure. The diaphragm portion 144 has an annular plate shape and has a through hole 144b (a portion of the through hole 140d) extending therethrough in the axial direction DX.

The diaphragm member 140 is located within the housing 100 and holds the displacement member 130 in such a manner that the displacement member 130 is displaceable in the axial direction DX. More specifically, the displacement member 130 is fixed to a radially inward portion of the diaphragm member 140 while being inserted through the through hole 140d of the diaphragm member 140. The diaphragm member 140 has a structure in which the diaphragm portion 144 is distorted in response to displacement of the displacement member 130 resulting from a change in pressure (combustion pressure) in the combustion chamber NS.

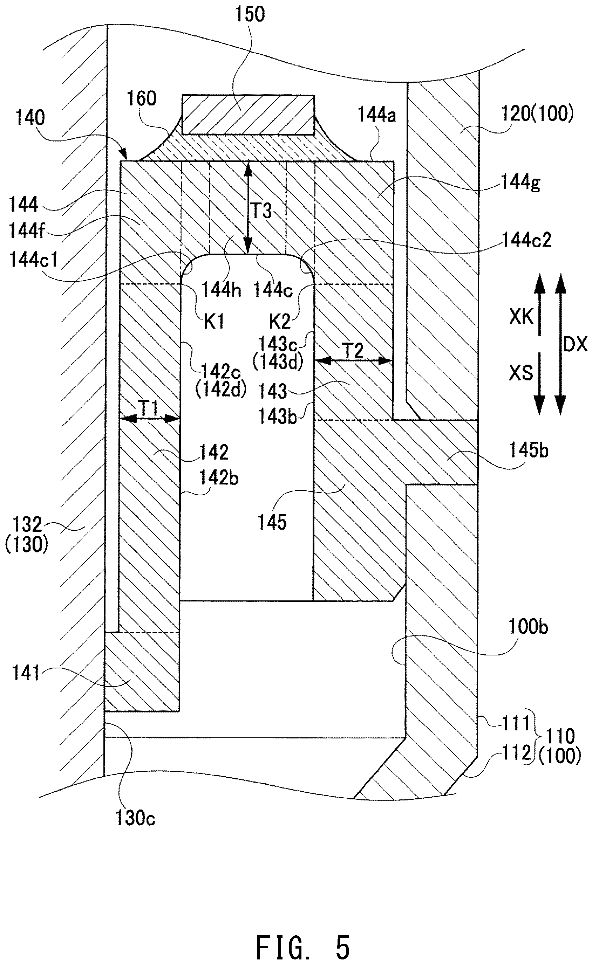

The diaphragm member 140 of the present embodiment will next be described in detail. FIG. 5 is an enlarged view showing region D of FIG. 4 and an enlarged fragmentary sectional view of the pressure sensor 10 cut along the axial direction DX by a plane which contains the axial line AX (center axis) of the pressure sensor 10. FIG. 6 is a perspective sectional view of the diaphragm member 140. FIG. 7 is a sectional view of the pressure sensor 10 taken along line G-G of FIG. 4.

The diaphragm member 140 has the diaphragm portion 144, a first connection portion 141, a second connection portion 145, a first intermediate connection portion 142, and a second intermediate connection portion 143 (see FIGS. 4 to 6). In FIG. 5, broken lines indicate the boundaries among these portions. The diaphragm portion 144 has an annular plate shape and has a front surface 144a and a back surface 144c. The front surface 144a of the diaphragm portion 144 is not exposed to combustion gas generated in the combustion chamber NS. The pressure detection elements 150 are mounted on the front surface 144a of the diaphragm portion 144.

The first connection portion 141 is located on the forward side XS (i.e., on the combustion chamber NS side or the lower side in FIGS. 4 and 5) of the diaphragm portion 144 with respect to the axial direction DX and connects the diaphragm member 140 to the displacement member 130. Specifically, the first connection portion 141 has a cylindrical shape, is greater in thickness than the first intermediate connection portion 142 to be described later (the inner circumferential surface of the first connection portion 141 is located radially inward of the inner circumferential surface of the first intermediate connection portion 142), and is joined by welding to the sleeve 132 of the displacement member 130. As a result, a gastight seal is provided between the inner circumferential surface of the first connection portion 141 and the outer circumferential surface of the sleeve 132 of the displacement member 130.

The second connection portion 145 is located on the axially forward side (i.e., on the combustion chamber NS side) of the diaphragm portion 144 and connects the diaphragm member 140 to the housing 100. The second connection portion 145 is greater in thickness than the second intermediate connection portion 143 to be described later (the outer circumferential surface of the second connection portion 145 is located radially outward of the outer circumferential surface of the second intermediate connection portion 143) and has an annular flange portion 145b protruding radially outward. The second connection portion 145 is joined to the housing 100 such that while the flange portion 145b is held between the rear end surface of the first housing portion 110 and the forward end surface of the second housing portion 120, the forward end surface (lower surface in FIG. 5) of the flange portion 145b is welded to the rear end surface of the first housing portion 110, and the rear end surface (upper surface in FIG. 5) of the flange portion 145b is welded to the forward end surface of the second housing portion 120. As a result, a gastight seal is provided between the second connection portion 145 and the housing 100.

The first intermediate connection portion 142 has a cylindrical shape, extends straight in the axial direction DX, and connects the first connection portion 141 and a radially inner portion 144f of the diaphragm portion 144. The thickness (wall thickness) of the first intermediate connection portion 142 is uniform (T1) over the entire extent thereof.

The second intermediate connection portion 143 has a cylindrical shape, extends straight in the axial direction DX, and connects the second connection portion 145 and a radially outer portion 144g of the diaphragm portion 144. The thickness (wall thickness) of the second intermediate connection portion 143 is uniform (T2) over the entire extent thereof.

As mentioned above, as a result of the first connection portion 141 of the diaphragm member 140 and the sleeve 132 of the displacement member 130 being joined together by welding, a gastight seal is provided therebetween, and as a result of the second connection portion 145 and the housing 100 being joined together by welding, a gastight seal is provided therebetween. Thus, the housing 100 and the displacement member 130 are connected through the diaphragm member 140, and the diaphragm member 140 provides a seal between an inner circumferential surface 100b of the housing 100 and an outer circumferential surface 130c of the displacement member 130 (see FIG. 5).

As a result, even when a portion of combustion gas generated in the combustion chamber NS enters the pressure sensor 10 through a gap between the displacement member 130 and the opening 112b of the first housing portion 110, entry of the combustion gas into the rearward side XK (upper side in FIGS. 4 and 5) of the diaphragm member 140 can be prevented. In the pressure sensor 10, a portion of combustion gas generated in the combustion chamber NS comes into contact with the back surface 144c of the diaphragm portion 144, an outer circumferential surface 142b of the first intermediate connection portion 142, and an inner circumferential surface 143b of the second intermediate connection portion 143.

The pressure detection elements 150 each having a rectangular plate shape are mounted on the front surface 144a of the diaphragm portion 144 of the diaphragm member 140 (see FIGS. 4, 5, and 7). Specifically, as shown in FIG. 7, the pressure detection element 150 has a rectangular shape in plan view, and two pressure detection elements 150 are provided at positions symmetrical with respect to a center O of the diaphragm portion 144 (axial line AX). An integrated circuit (not shown) disposed at a predetermined position within the housing 100 is electrically connected to these pressure detection elements 150 through unillustrated wires.

These pressure detection elements 150 are joined to the front surface 144a of the diaphragm portion 144 by means of a heat-resistant glass layer 160. The glass layer 160 is formed of inorganic glass (e.g., non-lead glass or lead glass) and is applied (fixedly attached) onto the front surface 144a of the diaphragm portion 144.

In the pressure sensor 10 of the present embodiment, when the displacement member 130 is displaced in the axial direction DX in response to a change in pressure (combustion pressure) in the combustion chamber NS, the diaphragm portion 144 connected to the displacement member 130 (sleeve 132) is deformed (the diaphragm portion 144 is distorted), and the pressure detection elements 150 provided on the front surface 144a of the diaphragm portion 144 are also distorted. The integrated circuit (not shown) detects (measures) deformation (distortion) of the diaphragm portion 144 on the basis of a change in resistances of the pressure detection elements 150 to be deformed (distorted) together with the diaphragm portion 144, thereby detecting the combustion pressure of the internal combustion engine body 1. The integrated circuit outputs an electric signal indicative of the detected combustion pressure to an external controller (e.g., an engine controller) through wiring lines (not shown) inserted through the connector member 200.

Meanwhile, the displacement member 130 has a protruding portion 130b protruding from the through hole 140d of the diaphragm member 140 toward the forward side XS (i.e., the combustion chamber NS side) with respect to the axial direction DX (see FIGS. 2 to 4). The protruding portion 130b is inserted into the sensor attachment hole 3 with a gap formed between the same and the inner circumferential surface of the sensor attachment hole 3 of the cylinder head 2, and a forward end portion thereof is disposed in the combustion chamber NS. The protruding portion 130b is exposed to combustion gas generated in the combustion chamber NS.

In the pressure sensor 10, a portion of heat of combustion gas generated in the combustion chamber NS is transmitted from the protruding portion 130b of the displacement member 130 to the diaphragm portion 144 through the first connection portion 141 (a portion connected to the displacement member 130) and the first intermediate connection portion 142 of the diaphragm member 140. Heat transmitted to the diaphragm portion 144 is then transmitted to the housing 100 through the second intermediate connection portion 143 and the second connection portion 145 (a portion connected to the housing 100) to thereby be released to the cylinder head 2 of the internal combustion engine body 1.

However, as a result of heat transmitted to the diaphragm portion 144 being partially transmitted to the pressure detection elements 150 mounted on the front surface 144a of the diaphragm portion 144, the pressure detection elements 150 may increase in temperature. Particularly, in the pressure sensor 10 of the present embodiment attached to the cylinder head 2 of the internal combustion engine body 1, the back surface 144c of the diaphragm portion 144 is exposed to combustion gas generated in the combustion chamber NS. As a result, in addition to transmission of a portion of heat of combustion gas to the diaphragm portion 144 through the protruding portion 130b of the displacement member 130, a portion of combustion gas comes into contact with the back surface 144c of the diaphragm portion 144; consequently, a portion of heat of combustion gas is transmitted directly to the diaphragm portion 144. Therefore, the temperatures of the pressure detection elements 150 mounted on the front surface 144a of the diaphragm portion 144 may further increase.

By contrast, in the pressure sensor 10 of the present embodiment, as shown in FIG. 5, the diaphragm member 140 satisfies a relation of T1 < T2 between the maximum thickness T1 of the first intermediate connection portion 142 and the minimum thickness T2 of the second intermediate connection portion 143. Notably, the maximum thickness of the first intermediate connection portion 142 is the maximum value of thickness (radial wall thickness) of the first intermediate connection portion 142. Specifically, in the present embodiment, since the thickness of the first intermediate connection portion 142 is uniform, the thickness (the fixed value) T1 is considered as the maximum thickness T1. The minimum thickness of the second intermediate connection portion 143 is the minimum value of thickness (radial wall thickness) of the second intermediate connection portion 143. Specifically, in the present embodiment, since the thickness of the second intermediate connection portion 143 is uniform, the thickness (the fixed value) T2 is considered as the minimum thickness T2.

As a result of the diaphragm member 140 employing such a thickness relation that the maximum thickness T1 of the first intermediate connection portion 142, which connects the first connection portion 141 connected to the displacement member 130 and the radially inner portion 144f of the diaphragm portion 144, is smaller than the minimum thickness T2 of the second intermediate connection portion 143, which connects the second connection portion 145 connected to the housing 100 and the radially outer portion 144g of the diaphragm portion 144, heat conduction from the protruding portion 130b of the displacement member 130 to the diaphragm portion 144 through the first intermediate connection portion 142 can be reduced as compared with the case where the maximum thickness T1 is equal to or greater than the minimum thickness T2 (e.g., the case in JP No. 4922822 where the thickness of the first intermediate connection portion is equal to the thickness of the second intermediate connection portion). Accordingly, an increase in temperature of the diaphragm portion 144 can be reduced.

Further, as a result of employment of such a thickness relation that the minimum thickness T2 of the second intermediate connection portion 143 is greater than the maximum thickness T1 of the first intermediate connection portion 142, heat conduction from the diaphragm portion 144 to the second intermediate connection portion 143 can be enhanced, and heat conduction from the second intermediate connection portion 143 to the housing 100 can be enhanced. Accordingly, heat release from the diaphragm portion 144 to the housing 100 (to the cylinder head 2 of the internal combustion engine body 1 in contact with the housing 100) can be enhanced. Therefore, an increase in temperature of the pressure detection elements 150 mounted on the front surface 144a of the diaphragm portion 144 can be reduced.

Also, in the pressure sensor 10 of the present embodiment, as a result of a portion of combustion gas generated in the combustion chamber NS coming into contact with the back surface 144c of the diaphragm portion 144, the outer circumferential surface 142b of the first intermediate connection portion 142, and the inner circumferential surface 143b of the second intermediate connection portion 143, these portions may rise in temperature; however, by virtue of satisfaction of the relation of T1 < T2, a temperature rise of the diaphragm portion 144 can be reduced as compared with the case of T1 ≥ T2.

As described above, in the pressure sensor 10 of the present embodiment, a temperature rise of the pressure detection elements 150 mounted on the front surface 144a of the diaphragm portion 144 can be reduced.

Further, in the pressure sensor 10 of the present embodiment, as shown in FIG. 5, the diaphragm portion 144 has such a thickness relation that an intermediate portion 144h is smaller in thickness than the inner portion 144f and the outer portion 144g. In FIG. 5, dash-dot lines indicate the boundaries among these portions. The inner portion 144f is a radially inner portion of the diaphragm portion 144 and is connected to the first intermediate connection portion 142. The outer portion 144g is a radially outer portion of the diaphragm portion 144 and is connected to the second intermediate connection portion 143. The intermediate portion 144h is a radially intermediate portion located between the inner portion 144f and the outer portion 144g and has a fixed thickness (wall thickness along the axial direction DX). In such a diaphragm portion 144, the thinner intermediate portion 144h is distorted greatly in response to a change in combustion pressure as compared with the inner portion 144f and the outer portion 144g.

Further, in the pressure sensor 10 of the present embodiment, as shown in FIG. 5, at least a portion of each pressure detection element 150 is mounted on the front surface of the intermediate portion 144h. As a result, since at least a portion of each pressure detection element 150, together with the intermediate portion 144h of the diaphragm portion 144, is distorted greatly in response to a change in combustion pressure, sensitivity of the pressure sensor 10 to a change in combustion pressure can be improved.

Also, in the pressure sensor 10 of the present embodiment, in a section (FIGS. 4 and 5 show enlarged fragmentary sections) of the pressure sensor 10 cut in the axial direction DX by a plane containing the axial line AX (center axis) of the pressure sensor 10, an outer surface 142c (a portion of the outer circumferential surface 142b) of the first intermediate connection portion 142, which surface faces radially outward, has a sectionally straight portion 142d extending straight toward the first connection portion 141 (downward in FIG. 5) from a boundary K1 between the inner portion 144f of the diaphragm portion 144 and the first intermediate connection portion 142, and an inner surface 143c (a portion of the inner circumferential surface 143b) of the second intermediate connection portion 143, which surface faces radially inward, has a sectionally straight portion 143d extending straight toward the second connection portion 145 (downward in FIG. 5) from a boundary K2 between the outer portion 144g of the diaphragm portion 144 and the second intermediate connection portion 143. Notably, in the present embodiment, the entire outer surface 142c is the sectionally straight portion 142d, and the entire inner surface 143c is the sectionally straight portion 143d.

Further, in the pressure sensor 10 of the present embodiment, in the above-mentioned section of the pressure sensor 10 (see FIGS. 4 and 5), a first boundary portion 144c1 of the back surface 144c of the diaphragm portion 144 adjacent to the outer surface 142c of the first intermediate connection portion 142 and a second boundary portion 144c2 of the back surface 144c adjacent to the inner surface 143c of the second intermediate connection portion 143 have an arc shape (specifically, a circular arc shape). By virtue of impartment of an arc shape to the first and second boundary portions 144c1 and 144c2 of the back surface 144c of the diaphragm portion 144, the diaphragm portion 144 can be deformed appropriately in response to a displacement in the axial direction DX of the displacement member 130.

Notably, the expression "extending straight toward the first connection portion 141" means "extending in a straight line toward a first connection portion 141 side (downward in FIG. 5)" and encompasses not only "extending straight in the axial direction DX (along the axial line AX" but also "extending straight in a direction intersecting the axial direction DX (a direction oblique to the axial line AX)." The same also applies to "extending straight toward the second connection portion 145." In the present embodiment, the sectionally straight portion 142d and the sectionally straight portion 143d extend straight in the axial direction DX (along the axial line AX).

Further, in the pressure sensor 10 of the present embodiment, the diaphragm member 140 satisfies a relation of T1 < T3 between the maximum thickness T1 of the first intermediate connection portion 142 and the minimum thickness T3 of the diaphragm portion 144. Notably, in the present embodiment, the minimum thickness T3 of the diaphragm portion 144 is the thickness of the intermediate portion 144h.

As a result of increasing the thickness of the diaphragm portion 144 as mentioned above, as compared with a case of T1 ≥ T3 (e.g., a case of T1 > T3 in Japanese Patent No. 4922822), heat capacity of the diaphragm portion 144 can be increased, and heat conduction from the diaphragm portion 144 to the second intermediate connection portion 143 can be enhanced (accordingly, heat release to the cylinder head 2 of the internal combustion engine body 1 can be enhanced), whereby an increase in temperature of the diaphragm portion 144 can be reduced. Therefore, in the pressure sensor 10 of the present embodiment, an increase in temperatures of the pressure detection elements 150 mounted on the front surface 144a of the diaphragm portion 144 can be further reduced. Notably, the present embodiment satisfies a relation of T1 < T2 < T3.

### (Heating test)

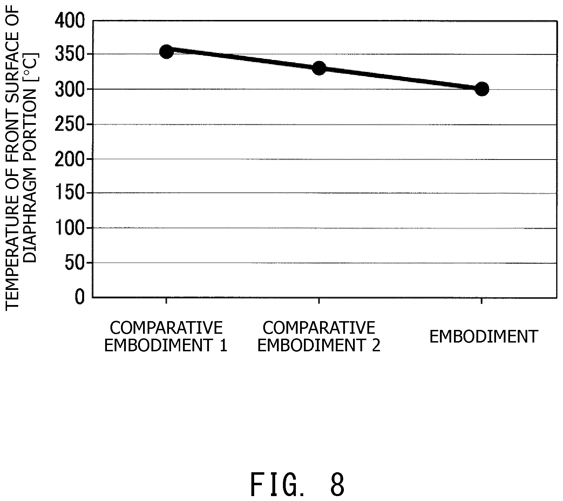

Next, a heating test was conducted on the pressure sensor 10 of the present embodiment, and the temperature of the front surface 144a of the diaphragm portion 144 was measured. Specifically, as shown in FIG. 3, while the pressure sensor 10 was attached to the cylinder head 2 of the internal combustion engine body 1 (specifically, a diesel engine body), the internal combustion engine body 1 was operated at a rotational speed of 4,000 rpm with WOT (wide open throttle) to thereby expose the forward side XS of the pressure sensor 10 to combustion gas, and the temperature of the front surface 144a of the diaphragm portion 144 was measured. Notably, in the present test, after start of operation of the internal combustion engine body 1, the temperature of the front surface 144a of the diaphragm portion 144 was obtained as test results upon convergence of a temperature rise of the front surface 144a of the diaphragm portion 144. FIG. 8 shows the test results.

In the present test, pressure sensors of comparative embodiments 1 and 2 were prepared, and the above-mentioned heating test was also conducted on these pressure sensors. The pressure sensors of comparative embodiments 1 and 2 differ from the pressure sensor 10 of the embodiment only in the thickness of the second intermediate connection portion of the diaphragm member.

Specifically, in the pressure sensor of comparative embodiment 1, the second intermediate connection portion of the diaphragm member is smaller in thickness than the second intermediate connection portion 143 of the embodiment, and the maximum thickness T1 of the first intermediate connection portion and the minimum thickness T2 of the second intermediate connection portion satisfy a relation of T1 > T2. More specifically, in comparative embodiment 1, the thickness of the first intermediate connection portion is uniform, and the thickness of the second intermediate connection portion is also uniform; therefore, a relation of (thickness of first intermediate connection portion) > (thickness of second intermediate connection portion) is satisfied.

In the pressure sensor of comparative embodiment 2, the second intermediate connection portion of the diaphragm member is smaller in thickness than the second intermediate connection portion 143 of the embodiment and greater in thickness than the second intermediate connection portion of comparative embodiment 1, and the maximum thickness T1 of the first intermediate connection portion and the minimum thickness T2 of the second intermediate connection portion satisfy a relation of T1 = T2. More specifically, in comparative embodiment 2, the thickness of the first intermediate connection portion is uniform, and the thickness of the second intermediate connection portion is also uniform; therefore, a relation of (thickness of first intermediate connection portion) = (thickness of second intermediate connection portion) is satisfied.

FIG. 8 also shows test results of comparative embodiments 1 and 2.

As shown in FIG. 8, in the pressure sensor of comparative embodiment 1, the temperature of the front surface of the diaphragm portion became about 350°C. In the pressure sensor of comparative embodiment 2, the temperature of the front surface of the diaphragm portion became about 330°C. By contrast, in the pressure sensor 10 of the embodiment, the temperature of the front surface 144a of the diaphragm portion 144 was about 300°C, indicating that the pressure sensor 10 was able to reduce a temperature rise of the front surface of the diaphragm portion as compared with the pressure sensors of comparative embodiments 1 and 2.

The above test results indicate that satisfaction of the relation of T1 < T2 can reduce a temperature rise of the front surface of the diaphragm portion 144 as compared with a case of T1 ≥ T2. Therefore, satisfaction of the relation of T1 < T2 can reduce a temperature rise of the pressure detection elements mounted on the front surface of the diaphragm portion.

### (Modified embodiment)

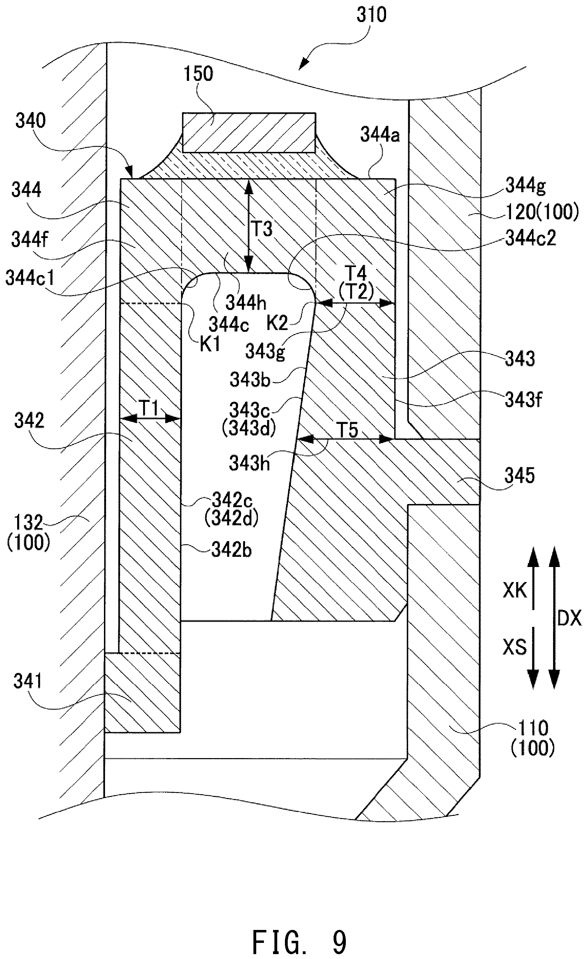

A pressure sensor 310 of the present modified embodiment differs from the pressure sensor 10 of the embodiment only in the form of the diaphragm member. A diaphragm member 340 of the present modified embodiment has a diaphragm portion 344, a first connection portion 341, a second connection portion 345, a first intermediate connection portion 342, and a second intermediate connection portion 343 (see FIG. 9). FIG. 9 is an enlarged fragmentary sectional view of the pressure sensor 310 according to the present modified embodiment and corresponds to FIG. 5 showing the embodiment. That is, FIG. 9 is an enlarged fragmentary sectional view of the pressure sensor 310 cut along the axial direction DX by a plane which contains the axial line (center axis) of the pressure sensor 310.

In the present modified embodiment also, as shown in FIG. 9, similarly to the embodiment, the diaphragm portion 344 has such a thickness relation that an intermediate portion 344h is smaller in thickness than an inner portion 344f and an outer portion 344g. Further, at least a portion of each pressure detection element 150 is mounted on the front surface of the intermediate portion 344h. As a result, since at least a portion of each pressure detection element 150, together with the intermediate portion 344h of the diaphragm portion 344, is distorted greatly in response to a change in combustion pressure, sensitivity of the pressure sensor 310 to a change in combustion pressure can be improved.

In the pressure sensor 310 of the present modified embodiment, similarly to the pressure sensor 10 of the embodiment, in a section (see FIG. 9) of the pressure sensor 310 cut in the axial direction DX by a plane containing the axial line AX (center axis), an outer surface 342c (a portion of an outer circumferential surface 342b) of the first intermediate connection portion 342, which surface faces radially outward, has a sectionally straight portion 342d extending straight toward the first connection portion 341 (downward in FIG. 9) from the boundary K1 between the inner portion 344f of the diaphragm portion 344 and the first intermediate connection portion 342, and an inner surface 343c (a portion of an inner circumferential surface 343b) of the second intermediate connection portion 343, which surface faces radially inward, has a sectionally straight portion 343d extending straight toward the second connection portion 345 (downward in FIG. 9) from the boundary K2 between the outer portion 344g of the diaphragm portion 344 and the second intermediate connection portion 343. Notably, in the present modified embodiment also, the entire outer surface 342c is the sectionally straight portion 342d, and the entire inner surface 343c is the sectionally straight portion 343d. However, in the present modified embodiment, the sectionally straight portion 343d extends straight in a direction intersecting the axial direction DX (a direction oblique to the axial line AX).

Further, in the pressure sensor 310 of the present modified embodiment, similarly to the pressure sensor 10 of the embodiment, in the above-mentioned section of the pressure sensor 310 (see FIG. 9), a first boundary portion 344c1 of a back surface 344c of the diaphragm portion 344 adjacent to the outer surface 342c of the first intermediate connection portion 342 and a second boundary portion 344c2 of the back surface 344c adjacent to the inner surface 343c of the second intermediate connection portion 343 have an arc shape (specifically, a circular arc shape). By virtue of impartment of an arc shape to the first and second boundary portions 344c1 and 344c2 of the back surface 344c of the diaphragm portion 344, the diaphragm portion 344 can be deformed appropriately in response to a displacement in the axial direction DX of the displacement member 130.

Meanwhile, in the pressure sensor 10 of the embodiment, the thickness of the second intermediate connection portion 143 is uniform (see FIG. 5). By contrast, in the pressure sensor 310 of the present modified embodiment, as shown in FIG. 9, the second intermediate connection portion 343 of the diaphragm member 340 satisfies a relation of T4 < T5 between the thickness T4 of a boundary portion 343g adjacent to the diaphragm portion 344 and the thickness T5 of a boundary portion 343h adjacent to the second connection portion 345.

Specifically, as shown in FIG. 9, an outer circumferential surface 343f of the second intermediate connection portion 343 of the present modified embodiment assumes a cylindrical surface extending straight in the axial direction DX, whereas an inner circumferential surface 343b of the second intermediate connection portion 343 assumes such a conical surface as to reduce in diameter (i.e., increases in distance from the outer circumferential surface 343f) toward the forward side XS (i.e., toward the second connection portion 345) with respect to the axial direction DX. As a result, the relation of T4 < T5 is satisfied.

As a result of increasing the thickness T5 of the second intermediate connection portion 343 at the boundary portion 343h adjacent to the second connection portion 345, heat conduction from the second intermediate connection portion 343 to the second connection portion 345 can be enhanced (thus, heat release to the internal combustion engine body 1 can be enhanced); accordingly, a temperature rise of the diaphragm portion 344 can be further reduced. Therefore, in the pressure sensor 310 of the present modified embodiment, a temperature rise of each pressure detection element 150 mounted on the front surface 344a of the diaphragm portion 344 can be further reduced.

In the pressure sensor 310 of the present modified embodiment, similarly to the pressure sensor 10 of the embodiment, the maximum thickness T1 of the first intermediate connection portion 342 and the minimum thickness T2 (= T4) of the second intermediate connection portion 343 satisfy the relation of T1 < T2. The maximum thickness T1 of the first intermediate connection portion 342 and the minimum thickness T3 of the diaphragm portion 344 satisfy the relation of T1 < T3.

While the present invention has been described with reference to the embodiment and the modified embodiment described above, the present invention is not limited thereto, but may be modified as appropriate without departing from the gist of the invention.

For example, the embodiment and the modified embodiment have been described while referring to the displacement member 130 having the rod-shaped heater member 131 extending in the axial direction DX. However, the present invention may use a displacement member having, in place of the heater member, a mere rod-shaped member (e.g., a tubular metal member whose end on the forward side XS is closed) extending in the axial direction DX.

The second intermediate connection portion 343 satisfying the relation of T4 < T5 employed by the modified embodiment has a structure in which the outer circumferential surface 343f of the second intermediate connection portion 343 assumes a cylindrical surface extending straight in the axial direction DX, whereas the inner circumferential surface 343b of the second intermediate connection portion 343 assumes such a conical surface as to reduce in diameter toward the forward side XS with respect to the axial direction DX. However, the form of the second intermediate connection portion satisfying the relation of T4 < T5 is not limited thereto. For example, the second intermediate connection portion may have a 2-step cylindrical shape consisting of a cylindrical portion on the diaphragm portion side and a cylindrical portion on the second connection portion side and having such a thickness relation that the latter cylindrical portion is greater in thickness than the former cylindrical portion.

In the embodiment, in a section of the pressure sensor 10 cut in the axial direction AX by a plane containing the axial line AX (the sections shown in FIGS. 4 and 5), the shape of the back surface 144c of the diaphragm portion 144 consists of an inner circular arc located on the radially inner side, an outer circular arc located on the radially outer side, and a straight line extending radially and connecting the inner circular arc and the outer circular arc. However, in the above-mentioned section, the back surface of the diaphragm portion may have an arc shape (e.g., a semicircular shape) being convex toward the rearward side XK with respect to the axial direction DX.

### [Description of Reference Numerals and Symbols]

- 1:: internal combustion engine body
- 2:: cylinder head
- 3:: sensor attachment hole
- 10, 310:: pressure sensor
- 100:: housing
- 110:: first housing portion
- 120:: second housing portion
- 130:: displacement member
- 130b:: protruding portion
- 131:: heater member
- 140, 340:: diaphragm member
- 140d:: through hole
- 141, 341:: first connection portion
- 142, 342:: first intermediate connection portion
- 142c, 342c:: outer surface
- 142d, 342d:: sectionally straight portion
- 143, 343:: second intermediate connection portion
- 143c, 343c:: inner surface
- 143d, 343d:: sectionally straight portion
- 144, 344:: diaphragm portion
- 144a, 344a:: front surface
- 144b:: through hole
- 144c, 344c:: back surface
- 144c1, 344c1:: first boundary portion
- 144c2, 344c2:: second boundary portion
- 144f, 344f:: inner portion
- 144g, 344g:: outer portion
- 144h, 344h:: intermediate portion
- 145, 345:: second connection portion
- 150:: pressure detection element
- 160:: glass layer
- 200:: connector member
- 343g, 343h:: boundary portion
- AX:: axial line
- DX:: axial direction
- NS:: combustion chamber
- XK:: axially rearward side
- XS:: axially forward side

## Claims

1. A pressure sensor (10, 310) which extends in an axial direction (DX) and detects combustion pressure in a combustion chamber (NS) of an internal combustion engine body (1) while being attached to the internal combustion engine body (1) in such a manner that an end of the pressure sensor on a forward side (XS) with respect to the axial direction (DX) is directed toward the combustion chamber (NS), comprising:
a rod-shaped displacement member (130) extending in the axial direction (DX) and being displaceable in the axial direction (DX) in response to a change in the combustion pressure received from the axially forward side (XS);
a tubular housing (100) extending in the axial direction (DX), radially surrounding at least a portion of the displacement member (130), and being partially in contact with the internal combustion engine body (1);
a diaphragm member (140, 340) connected to the displacement member (130) and having a diaphragm portion (144, 344) being distorted in response to a displacement of the displacement member (130) resulting from a change in the combustion pressure; and
a pressure detection element (150) provided on a front surface (144a, 344a) of the diaphragm portion (144, 344),
wherein the diaphragm member (140, 340) has an annular shape in plan view and has a through hole (140d) extending therethrough in the axial direction (DX),
wherein the diaphragm member (140, 340) has
the diaphragm portion (144, 344) having an annular plate shape, having the front surface (144a, 344a) and a back surface (144c, 344c), and carrying the pressure detection element (150) on the front surface (144a, 344a) not exposed to the combustion gas,
**characterized in that** the displacement member (130) is connected to the diaphragm member (140, 340) while being inserted through the through hole (140d) of the diaphragm member (140, 340) and has a protruding portion (130b) protruding from the through hole (140d) of the diaphragm member (140, 340) toward the axially forward side (XS) and exposed to combustion gas generated in the combustion chamber (NS),
wherein the diaphragm member (140, 340) has
a first connection portion (141, 341) located on the axially forward side (XS) of the diaphragm portion (144, 344) and connecting the diaphragm member (140, 340) to the displacement member (130),
a second connection portion (145, 345) located on the axially forward side (XS) of the diaphragm portion (144, 344) and connecting the diaphragm member (140, 340) to the housing (100),
a cylindrical first intermediate connection portion (142, 342) extending in the axial direction (DX) and connecting the first connection portion (141, 341) and a radially inner portion of the diaphragm portion (144, 344), and
a cylindrical second intermediate connection portion (143, 343) extending in the axial direction (DX) and connecting the second connection portion (145, 345) and a radially outer portion of the diaphragm portion (144, 344),
wherein the diaphragm portion (144, 344) is disposed at such a position that the back surface (144c, 344c) is exposed to the combustion gas, and
wherein a maximum thickness T1 of the first intermediate connection portion (142, 342) and a minimum thickness T2 of the second intermediate connection portion (143, 343) satisfy a relation of T1 < T2.

2. A pressure sensor (10, 310) according to claim 1, wherein the diaphragm portion (144, 344) has
a radially inner portion (144f, 344f) connected to the first intermediate connection portion (142, 342),
a radially outer portion (144g, 344g) connected to the second intermediate connection portion (143, 343), and
an intermediate portion (144h, 344h) located between the inner portion (144f, 344f) and the outer portion (144g, 344g),
wherein the intermediate portion (144h, 344h) is smaller in thickness than the inner portion (144f, 344f) and the outer portion (144g, 344g),
wherein at least a portion of the pressure detection element (150) is mounted on a front surface of the intermediate portion (144h, 344h), and
wherein, in a section of the pressure sensor (10, 310) cut in the axial direction (DX) by a plane containing an axial line (AX) of the pressure sensor (10, 310),
an outer surface (142c, 342c) of the first intermediate connection portion (142, 342), which surface faces radially outward, has a sectionally straight portion (142d, 342d) extending straight toward the first connection portion (141, 341) from a boundary (K1) between the inner portion (144f, 344f) and the first intermediate connection portion (142, 342),
an inner surface (143c, 343c) of the second intermediate connection portion (143, 343), which surface faces radially inward, has a sectionally straight portion (143d, 343d) extending straight toward the second connection portion (145, 345) from a boundary (K2) between the outer portion (144g, 344g) and the second intermediate connection portion (143, 343), and
a boundary portion (144c1, 344c1) of the back surface (144c, 344c) of the diaphragm portion (144, 344) adjacent to the outer surface (142c, 342c) of the first intermediate connection portion (142, 342) and a boundary portion (144c2, 344c2) of the back surface (144c, 344c) adjacent to the inner surface (143c, 343c) of the second intermediate connection portion (143, 343) have an arc shape.

3. A pressure sensor (10, 310) according to claim 1 or 2, wherein the maximum thickness T1 of the first intermediate connection portion (142, 342) and the minimum thickness T3 of the diaphragm portion (144, 344) satisfy a relation of T1 < T3.

4. A pressure sensor (310) according to any one of claims 1 to 3, wherein a thickness T4 of the second intermediate connection portion (343) at a boundary portion (344g) adjacent to the diaphragm portion (344) and a thickness T5 of the second intermediate connection portion (343) at a boundary portion (343h) adjacent to the second connection portion (345) satisfy a relation of T4 < T5.

## Patentansprüche

1. Drucksensor (10, 310), der sich in einer axialen Richtung (DX) erstreckt und einen Verbrennungsdruck in einer Verbrennungskammer (NS) eines Verbrennungsmotorkörpers (1), während er auf eine solche Weise an dem Verbrennungsmotorkörper (1) befestigt ist, dass ein Ende des Drucksensors auf einer nach vorne gerichteten Seite (XS) in Bezug zu der axialen Richtung (DX) zu der Verbrennungskammer (NS) gerichtet ist, umfassend:
ein stangenförmiges Verlagerungselement (130), das sich in der axialen Richtung (DX) erstreckt und in der axialen Richtung (DX) als Reaktion auf eine Änderung des Verbrennungsdrucks verlagert werden kann, der von der axial nach vorne gerichteten Seite (XS) empfangen wird;
ein röhrenförmiges Gehäuse (100), das sich in der axialen Richtung (DX) erstreckt, wenigstens einen Abschnitt des Verlagerungselements (130) radial umgibt und teilweise mit dem Verbrennungsmotorkörper (1) in Kontakt steht;
ein Membranelement (140, 340), das mit dem Verlagerungselement (130) verbunden ist und einen Membranabschnitt (144, 344) aufweist, der als Reaktion auf eine Verlagerung des Verlagerungselements (130) deformiert wird, die eine Folge einer Veränderung des Verbrennungsdrucks ist; und
ein Druckerfassungselement (150), das auf einer vorderen Oberfläche (144a, 344a) des Membranabschnitts (144, 344) bereitgestellt ist,
wobei das Membranelement (140, 340) eine ringförmige Form in der Draufsicht aufweist und eine Durchbohrung (140d) aufweist, die sich in der axialen Richtung (DX) dahindurch erstreckt,
wobei das Membranelement (140, 340) den Membranabschnitt (144, 344) mit einer ringförmigen Plattenform mit der vorderen Oberfläche (144a, 344a) und einer hinteren Oberfläche (144c, 344c) aufweist und das Drucknachweiselement (150) auf der vorderen Oberfläche (144a, 344a) trägt, die nicht dem Verbrennungsgas ausgesetzt ist,
**dadurch gekennzeichnet, dass** das Verlagerungselement (130) mit dem Membranelement (140, 340) verbunden ist, während es durch die Durchgangsbohrung (140d) des Membranelements (140, 340) eingesetzt wird, und einen vorstehenden Abschnitt (130b) aufweist, der von der Durchgangsbohrung (140d) des Membranelements (140, 340) zu der axial nach vorne gerichteten Seite (XS) und dem Verbrennungsgas ausgesetzt vorsteht, das in der Verbrennungskammer (NS) erzeugt wird,
wobei das Membranelement (140, 340) aufweist:
einen ersten Verbindungsabschnitt (141, 341), der sich auf der axial nach vorne gerichteten Seite (XS) des Membranabschnitts (144, 344) befindet und das Membranelement (140, 340) mit dem Verlagerungselement (130) verbindet,
einen zweiten Verbindungsabschnitt (145, 345), der sich auf der axial nach vorne gerichteten Seite (XS) des Membranelements (144, 344) befindet und das Membranelement (140, 340) mit dem Gehäuse (100) verbindet,
einen zylindrischen ersten Zwischenverbindungsabschnitt (142, 342), der sich in der axialen Richtung (DX) erstreckt und den ersten Verbindungsabschnitt (141, 341) und einen radial inneren Abschnitt des Membranabschnitts (144, 344) verbindet, und
einen zylindrischen zweiten Zwischenverbindungsabschnitt (143, 343), der sich in der axialen Richtung (DX) erstreckt und den zweiten Verbindungsabschnitt (145, 345) und einen radial äußeren Abschnitt des Membranabschnitts (144, 344) verbindet,
wobei der Membranabschnitt (144, 344) in einer solchen Position angeordnet ist, dass die hintere Oberfläche (144c, 344c) dem Verbrennungsgas ausgesetzt ist, und
wobei eine maximale Dicke T1 des ersten Zwischenverbindungsabschnitts (142, 342) und eine minimale Dicke T2 des zweiten Zwischenverbindungsabschnitts (143, 343) eine Beziehung von T1 < T2 erfüllen.

2. Drucksensor (10, 310) nach Anspruch 1, wobei der Membranabschnitt (133, 344) aufweist:
einen radial inneren Abschnitt (144f, 344f), der mit dem ersten Zwischenverbindungsabschnitt (142, 342) verbunden ist,
einen radial äußeren Abschnitt (144g, 344g), der mit dem zweiten Zwischenverbindungsabschnitt (143, 343) verbunden ist, und
einen Zwischenabschnitt (144h, 344h), der sich zwischen dem inneren Abschnitt (144f, 344f) und dem äußeren Abschnitt (144g, 344g) befindet,
wobei der Zwischenabschnitt (144h, 344h) in der Dicke kleiner ist als der innere Abschnitt (144f, 344f) und der äußere Abschnitt (144g, 344g),
wobei wenigstens ein Abschnitt des Druckerfassungselements (150) auf einer vorderen Oberfläche des Zwischenabschnitts (144h, 344h) gelagert ist, und
wobei in einem Bereich des Drucksensors (10, 310), der in der axialen Richtung (DX) durch eine Ebene geschnitten wird, die eine axiale Linie (AX) des Drucksensors (10, 310) enthält,
eine äußere Oberfläche (142c, 342c) des ersten Zwischenverbindungsabschnitts (142, 342), dessen Oberfläche radial nach außen gewandt ist, einen geraden Sektionsabschnitt (142d, 342d) aufweist, der sich gerade zu dem ersten Verbindungsabschnitt (141, 341) von einer Grenze (K1) zwischen dem inneren Abschnitt (144f, 344f) und dem ersten Zwischenverbindungsabschnitt (142, 342) erstreckt,
eine innere Oberfläche (143c, 343c) des zweiten Zwischenverbindungsabschnitts (143, 343), dessen Oberfläche nach innen gewandt ist, weist einen geraden Sektionsabschnitt (143d, 343d) auf, der sich zu dem zweiten Verbindungsabschnitt (145, 345) von einer Grenze (K2) zwischen dem äußeren Abschnitt (144g, 344g) und dem zweiten Zwischenverbindungsabschnitt (143, 343) erstreckt, und
ein Grenzabschnitt (144c1, 344c1) der hinteren Oberfläche (144c, 344c) des Membranabschnitts (144, 344) neben der äußeren Oberfläche (142c, 342c) des ersten Zwischenverbindungsabschnitts (142, 342) und ein Grenzabschnitt (144c2, 344c2) der hinteren Oberfläche (144c, 344c) neben der inneren Oberfläche (143c, 343c) des zweiten Zwischenverbindungsabschnitts (143, 343) eine Bogenform aufweisen.

3. Drucksensor (10, 310) nach Anspruch 1 oder 2, wobei die maximale Dicke T1 des ersten Zwischenverbindungsabschnitts (142, 342) und die minimale Dicke T3 des Membranabschnitts (144, 344) eine Beziehung von T1 < T3 erfüllen.

4. Drucksensor (310) nach einem der Ansprüche 1 bis 3, wobei eine Dicke T4 des zweiten Zwischenverbindungsabschnitts (343) bei einem Grenzabschnitt (344g) neben dem Membranabschnitt (344) und eine Dicke T5 des zweiten Zwischenverbindungsabschnitts (343) bei einem Grenzabschnitt (343h) neben dem zweiten Verbindungsabschnitt (345) eine Beziehung von T4 < T5 erfüllen.

## Revendications

1. Capteur de pression (10, 310) qui s'étend dans une direction axiale (DX) et détecte une pression de combustion dans une chambre de combustion (NS) d'un corps de moteur à combustion interne (1) tout en étant fixé au corps de moteur à combustion interne (1) de manière telle qu'une extrémité du capteur de pression sur un côté vers l'avant (XS) par rapport à la direction axiale (DX) soit dirigée vers la chambre de combustion (NS), comprenant :
un organe de déplacement en forme de tige (130) s'étendant dans la direction axiale (DX) et étant déplaçable dans la direction axiale (DX) en réponse à un changement de la pression de combustion reçue à partir du côté axialement vers l'avant (XS) ;
un logement tubulaire (100) s'étendant dans la direction axiale (DX), entourant radialement au moins une partie de l'organe de déplacement (130), et étant partiellement en contact avec le corps de moteur à combustion interne (1) ;
un organe à diaphragme (140, 340) raccordé à l'organe de déplacement (130) et ayant une partie de diaphragme (144, 344) déformée en réponse à un déplacement de l'organe de déplacement (130) résultant d'un changement de la pression de combustion ; et
un élément de détection de pression (150) prévu sur une surface avant (144a, 344a) de la partie de diaphragme (144, 344), dans lequel l'organe à diaphragme (140, 340) a une forme annulaire en vue en plan et a un trou débouchant (140d) s'étendant à travers celui-ci dans la direction axiale (DX),
dans lequel l'organe à diaphragme (140, 340) a
la partie de diaphragme (144, 344) ayant une forme de plaque annulaire, ayant la surface avant (144a, 344a) et une surface arrière (144c, 344c), et supportant l'élément de détection de pression (150) sur la surface avant (144a, 344a) non exposée au gaz de combustion,
**caractérisé en ce que** l'organe de déplacement (130) est raccordé à l'organe à diaphragme (140, 340) tout en étant inséré à travers le trou débouchant (140d) de l'organe à diaphragme (140, 340) et a une partie saillante (130b) faisant saillie à partir du trou débouchant (140d) de l'organe à diaphragme (140, 340) vers le côté axialement vers l'avant (XS) et exposée à un gaz de combustion généré dans la chambre de combustion (NS),
dans lequel l'organe à diaphragme (140, 340) a
une première partie de raccordement (141, 341) située sur le côté axialement vers l'avant (XS) de la partie de diaphragme (144, 344) et raccordant l'organe à diaphragme (140, 340) à l'organe de déplacement (130),
une seconde partie de raccordement (145, 345) située sur le côté axialement vers l'avant (XS) de la partie de diaphragme (144, 344) et raccordant l'organe à diaphragme (140, 340) au logement (100),
une première partie de raccordement intermédiaire cylindrique (142, 342) s'étendant dans la direction axiale (DX) et raccordant la première partie de raccordement (141, 341) et une partie radialement intérieure de la partie de diaphragme (144, 344), et
une seconde partie de raccordement intermédiaire cylindrique (143, 343) s'étendant dans la direction axiale (DX) et raccordant la seconde partie de raccordement (145, 345) et une partie radialement extérieure de la partie de diaphragme (144, 344),
dans lequel la partie de diaphragme (144, 344) est disposée à une position telle que la surface arrière (144c, 344c) soit exposé au gaz de combustion, et
dans lequel une épaisseur maximum T1 de la première partie de raccordement intermédiaire (142, 342) et une épaisseur minimum T2 de la seconde partie de raccordement intermédiaire (143, 343) satisfont à une relation de T1 < T2.

2. Capteur de pression (10, 310) selon la revendication 1, dans lequel la partie de diaphragme (144, 344) a
une partie radialement intérieure (144f, 344f) raccordée à la première partie de raccordement intermédiaire (142, 342),
une partie radialement extérieure (144g, 344g) raccordée à la seconde partie de raccordement intermédiaire (143, 343), et
une partie intermédiaire (144h, 344h) située entre la partie intérieure (144f, 344f) et la partie extérieure (144g, 344g),
dans lequel la partie intermédiaire (144h, 344h) est plus petite en épaisseur que la partie intérieure (144f, 344f) et la partie extérieure (144g, 344g),
dans lequel au moins une partie de l'élément de détection de pression (150) est montée sur une surface avant de la partie intermédiaire (144h, 344h), et
dans lequel, dans une section du capteur de pression (10, 310) coupée dans la direction axiale (DX) par un plan contenant une ligne axiale (AX) du capteur de pression (10, 310),
une surface extérieure (142c, 342c) de la première partie de raccordement intermédiaire (142, 342), laquelle surface fait face radialement vers l'extérieur, a une partie droite en section (142d, 342d) s'étendant de façon droite vers la première partie de raccordement (141, 341) à partir d'une limite (K1) entre la partie intérieure (144f, 344f) et la première partie de raccordement intermédiaire (142, 342),
une surface intérieure (143c, 343c) de la seconde partie de raccordement intermédiaire (143, 343), laquelle surface fait face radialement vers l'intérieur, a une partie droite en section (143d, 343d) s'étendant de façon droite vers la seconde partie de raccordement (145, 345) à partir d'une limite (K2) entre la partie extérieure (144g, 344g) et la seconde partie de raccordement intermédiaire (143, 343), et
une partie de limite (144c1, 344c1) de la surface arrière (144c, 344c) de la partie de diaphragme (144, 344) adjacente à la surface extérieure (142c, 342c) de la première partie de raccordement intermédiaire (142, 342) et une partie de limite (144c2, 344c2) de la surface arrière (144c, 344c) adjacente à la surface intérieure (143c, 343c) de la seconde partie de raccordement intermédiaire (143, 343) ont une forme arquée.

3. Capteur de pression (10, 310) selon la revendication 1 ou 2, dans lequel l'épaisseur maximum T1 de la première partie de raccordement intermédiaire (142, 342) et l'épaisseur minimum T3 de la partie de diaphragme (144, 344) satisfont à une relation de T1 < T3.

4. Capteur de pression (310) selon l'une quelconque des revendications 1 à 3, dans lequel une épaisseur T4 de la seconde partie de raccordement intermédiaire (343) au niveau d'une partie de limite (344g) adjacente à la partie de diaphragme (344) et une épaisseur T5 de la seconde partie de raccordement intermédiaire (343) au niveau d'une partie de limite (343h) adjacente à la seconde partie de raccordement (345) satisfont à une relation de T4 < T5.
